(19) Europäisches Patentamt
European Patent Office
Office européen des brevets

(11) **EP 2 372 420 A1**

(12) **EUROPEAN PATENT APPLICATION**

(43) Date of publication:
**05.10.2011 Bulletin 2011/40**

(51) Int Cl.:
***G02B 6/28*** (2006.01)

(21) Application number: **10003637.5**

(22) Date of filing: **01.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicants:
• **Alcatel-Lucent Deutschland AG**
**70435 Stuttgart (DE)**

• **Friedrich-Alexander-Universität Erlangen-Nürnberg**
**91054 Erlangen (DE)**

(72) Inventor: **Buelow, Henning**
**70806 Kernwestheim (DE)**

(74) Representative: **Reichl, Wolfgang**
**MERH-IP**
**Matias Erny Reichl Hoffmann**
**Paul-Heyse-Straße 29**
**80336 München (DE)**

(54) **Optical mode splitter for MIMO transmission over multimode fiber**

(57) The present document relates to optical transmission systems. In particular, it relates to multiple input, multiple output (MIMO) transmission over optical multimode fibers (MMF). More specifically, the present document relates to the coupling in and/or out of different optical modes of a MMF or a few mode fiber (FMF). An optical waveguide structure (400) configured to interconnect with a multimode fiber (401) supporting M optical modes, M>2, and configured to insert and/or isolate L subgroups of the M optical modes to and/or from the multimode fiber (401), L>1, is described. The L subgroups of optical modes each comprise less than M optical modes and the L subgroups in total comprise the M optical modes. The structure comprises a coupling section (402) configured to interconnect with the multimode fiber (401) and to transfer the M optical modes between the multimode fiber (401) and the optical waveguide structure (400), wherein the coupling section (402) has a refractive index matching a refractive index of the multimode fiber. Furthermore, the structure comprises a terminal section (415) opposite the coupling section (402) comprising L waveguides (403) which are configured to each provide and/or receive one of the L subgroups, respectively. In addition, the structure comprises a taper section (430) intermediate the coupling section (402) and the terminal section (410) and configured to adiabatically isolate each one of the M optical modes to one of the L waveguides (403); and/or merge the modes of the L waveguides (403) to the M optical modes.

Fig. 4

EP 2 372 420 A1

**Description**

The present document relates to optical transmission systems. In particular, it relates to multiple input, multiple output (MIMO) transmission over optical multimode fibers (MMF). More specifically, the present document relates to the coupling in and/or out of different optical modes of a MMF or a few mode fiber (FMF).

Multi Gigabit/s optical transmissions systems have been proposed which increase the capacity, i.e. the bits per second, transported over an optical fiber within a given spectrum by moving from a single-mode fiber (SMF) to a multi-mode fiber (MMF) and by transporting different communication channels over the different spatial modes of the MMF. In a similar manner to MIMO transmission in wireless or wireline systems, the originally transmitted communication channels of the optical transmission system can be separated from the mix of the signals detected by N coherent receivers by joint digital signal processing (DSP) of the N received signals. The communication channels can be e.g. single-carrier channels or optical OFDM channels.

Moreover, the spot sizes of the MMF modes in a multi-mode fiber are typically larger than the spot size of the mode in a single-mode fiber. By consequence, the optical signal intensity across the profile of the MMF is lower than the optical signal intensity across the profile of a SMF. In view of the fact that many non-linear distortion effects of a fiber, e.g. self phase modulation (SPM) or cross phase modulation (XPM), increase with an increasing intensity across the profile of the fiber, the impact of non-linear distortion effects in MMF should be reduced compared to SMF. Hence, the associated lower optical non-linearity enables higher fiber launch powers at an optical transmitter before the non-linear signal degradation impacts the quality of the communication channel. As a consequence, a higher OSNR budget can be expected leading to longer link length (e.g. submarine link) or to higher spectral efficiency.

The present document relates to the issue of coupling the different spatial modes out of or into a MMF/FMF. In particular, the present document proposes a passive optical waveguide structure serving as optical output/input coupler which transforms the different MMF modes to different single mode fiber or waveguide output/input ports. Such a passive optical waveguide is an inherently low loss device. Furthermore, such a passive optical waveguide allows limiting the number of MIMO receivers to a low, possibly a minimum, value. This minimum value is typically the number of MMF modes or the number of modes of a few mode fiber (FMF). Hence, a passive optical coupling device allows saving power by reducing the number of receivers. This further reduces the complexity of the MIMO processing in the DSP.

According to an aspect, an optical waveguide structure configured to interconnect with a multimode fiber supporting M optical modes, M>2, is described. In the present document, degenerated modes with differently rotated mode fields are considered as different modes. On the other hand, degenerated modes with orthogonal polarizations are considered as one mode, since they are commonly split in a coherent polarization diversity receiver. The optical waveguide structure may be configured to insert and/or isolate L subgroups of the M optical modes to and/or from the multimode fiber, with L> 1. Preferably, the L subgroups of optical modes each comprise less than M optical modes. On the other hand, the L subgroups in total typically comprise the M optical modes. In other words, the optical waveguide structure should provide L separate subgroups, e.g. within L separate waveguides, wherein each of the L subgroups comprises less than the total number of M modes carried by the multimode fiber. In an embodiment, each of the L subgroups comprises only one or up to two modes. On the other hand, the M optical modes are comprised in at least one of the L subgroups, i.e. none of the M optical modes is dropped within the optical waveguide structure.

As such, in an embodiment with M=L, the M optical modes of a multimode fiber may be coupled to separate waveguides. In particular, each of the M optical modes may be coupled (or isolated) to a fundamental mode of one of L (=M) waveguides, respectively. In the opposite propagation direction, the fundamental modes of the L (=M) waveguides may be coupled to a different of the M optical modes of the multimode fiber, respectively. In other words, the fundamental modes of the L (=M) waveguides may be merged to the M optical modes of the multimode fiber.

The waveguide structure may comprise a fused silica fiber structure, a crystal fiber structure, an integrated optical structure and/or a photonic crystal structure.

The optical waveguide structure may comprise a coupling section configured to interconnect with the multimode fiber and/or configured to transfer the M optical modes between the multimode fiber and the optical waveguide structure. In other words, the coupling section may allow for a low loss interconnection of the optical waveguide structure with the multimode fiber. This may be achieved using a coupling section which has a refractive index profile matching a refractive index profile of the multimode fiber. Hence the mode fields are similar and negligible loss butt coupling is possible. The index profiles may be matched along the cross-section of the coupling section and the multimode fiber. The coupling section may be configured to interconnect with the multimode fiber using butt coupling.

The optical waveguide structure may comprise a terminal section opposite the coupling section comprising L waveguides which are configured to each provide and/or receive one of the L subgroups, respectively. In an embodiment, L may be greater or equal to M, such that each subgroup comprises exactly one of the M optical modes, whereas some of the subgroups may comprise the same optical mode.

The optical waveguide structure may comprise a taper section intermediate the coupling section and the terminal section and configured to adiabatically isolate each one of the M optical modes to one of the L waveguides, and/or merge the modes of the L waveguides to the M optical modes. In other words, the taper section may be configured to distribute or assign the M optical modes to the L subgroups carried by the L waveguides, respectively. In the opposite direction, the taper section may be configured to superpose the optical modes coming from L waveguides and to thereby provide the M optical modes of the multimode fiber. As indicated above, some of the M optical modes may be assigned to several of the L waveguides and/or corresponding modes of the L waveguides may be superposed onto the same mode of the multimode fiber.

The term "adiabatically" refers to a smooth and/or progressive isolation/merging of the modes. An adiabatic isolation/merging of modes is performed such that the cross-coupling between different modes remains below a predetermined threshold value. Preferably, there is no cross-coupling between different modes.

The taper section may comprise a first and a second waveguide of the L waveguides, extending longitudinally from the coupling section to the terminal section. Typically, the L waveguides extend longitudinally from the coupling section to the terminal section, wherein the longitudinal direction is the propagation direction of the optical modes. In the following, certain aspects of an example first and section waveguide are outlined. These aspects are applicable to all of the L waveguides.

A refractive index of the first waveguide may increase and/or decrease adiabatically along a longitudinal extension of the first waveguide. In particular, the refractive index of the first waveguide may change differently along the longitudinal extension than a refractive index of the second waveguide. By manipulating the refractive index profile along the propagation direction for each of the L waveguides independently and possibly differently, different modes may be concentrated in different ones of the L waveguides. In the opposite direction, the different modes of the L waveguides may be coupled to the M optical modes of the multimode fiber. As a design rule, it may be considered that even or symmetrical optical modes are typically concentrated in waveguides having a higher refractive index, whereas odd or non-symmetrical optical modes are typically concentrated in waveguides having a lower refractive index. In an embodiment, the refractive index of the first waveguide is higher than the refractive index of the second waveguide, to thereby concentrate a symmetric mode of the M modes in the first waveguide.

The distance between the first and the second waveguide may increase and/or decrease adiabatically, i.e. the distance may be varied such that there is no or only little cross-coupling between different modes. In general, the distances between the L waveguides may be varied independently along the propagation direction. If such a variation of the distance is performed for a predetermined minimum length along the longitudinal or propagation extension, then a desired isolation and/or merging of modes may be achieved.

The variation of the distance between the L waveguides, also referred to as separation tapering, may be performed in conjunction with the variation of the refractive index profile of the L waveguides, also referred to as index tapering. The separation tapering may be performed subsequently to index tapering and/or the separation tapering and the index tapering may be performed jointly along the propagation axis.

The first and the second waveguide may be adiabatically merged within the taper section and the merged waveguide may extend towards the terminal section. In other words, the number of waveguides at the coupling section may be higher than the number of waveguides at the terminal section. In an embodiment, the number of waveguides at the terminal section is M, whereas the number of waveguides at the coupling section is greater than M. By using the merging of waveguides, an optical mode which has been coupled to several waveguides can be merged.

The waveguide structure may further comprise an optical Y branch configured to merge a mode carried in the first and the second waveguide downstream of the terminal section to a terminal waveguide; and/or split a mode carried in a terminal waveguide upstream of the terminal section onto the first and the second waveguide. The waveguide structure may further comprising a 1:1 coupler configured to split two different modes carried in the first waveguide downstream of the terminal section to two terminal waveguides, respectively; and/or merge two different modes carried on two terminal waveguides upstream of the terminal section, respectively, to the first waveguide carrying the two different modes. In other words, the waveguide structure may make use of other optical components for the merging and/or isolation of optical modes.

According to another aspect, an optical transmitter configured to transmit data over M communication channels using M optical modes of a multimode fiber, respectively, M>2, is described. The optical transmitter may comprise a laser configured to provide an optical carrier signal. Furthermore, the optical transmitter may comprise M modulators configured to modulate data onto the optical carrier signal, thereby yielding M differently modulated optical signals. In addition, the optical transmitter may comprise an optical waveguide structure according to any of the aspects outlined in the present document, configured to insert the M differently modulated optical signals onto the M optical modes of the multimode fiber.

According to a further aspect, an optical receiver configured to receive data transmitted over M communication channels using M optical modes of a multimode fiber, respectively, M>2, is described. The optical receiver may comprise an optical waveguide structure according to any of the aspects outlined in the present document, configured to isolate L subgroups of optical modes on L waveguides from the M optical modes of the multi-mode fiber. Furthermore, the optical receiver may comprise L coherent receivers for the L waveguides, respectively, the L coherent receivers being configured to provide a plurality of digitized received signals. In addition, the optical receiver may comprise a multiple-input multiple-output processing unit configured to determine the data of the M communication channels from the plurality of digitized received signals.

According to a further aspect, a method for interconnecting with a multimode fiber comprising M optical modes, M>2, and for inserting and/or isolating L subgroups of the M optical modes to and/or from the multimode fiber (401), L> 1, is described. The L subgroups of optical modes may each comprise less than M optical modes and the L subgroups in total may comprise the M optical modes. The method may comprise the step of transferring the M optical modes between the multimode fiber and an optical waveguide structure, wherein at a coupling section the optical waveguide structure has a refractive index matching a refractive index of the multimode fiber. Furthermore, the method may comprise the step of isolating each one of the M optical modes to one of L waveguides and/or merging the modes of L waveguides to the M optical modes. In addition, the method may comprise the step of providing and/or receiving a subgroup of optical modes at each one of the L waveguides.

It should be noted that the above mentioned aspects may be combined with one another or extracted from one another in various ways. In particular, all possible claim and feature combinations are considered to be disclosed by the present document. Furthermore, the aspects and features outlined in relation with a system are equally applicable in relation to the corresponding method.

The objects and features of the invention will become apparent from the following description of examples. The present invention is described in the following by referring to exemplary embodiments illustrated schematically in the accompanying figures, wherein

Fig. 1 illustrates an exemplary optical MMF transmission system using multiple-input multiple output techniques;
Fig. 2a shows exemplary modes in a multi-mode fiber;
Fig. 2b illustrates example mode fields of a MMF or FMF;
Fig. 2c illustrates an example of two degenerated modes of an $LP_{11}$ mode having the same phase constant;
Fig. 3a shows an exemplary setup for the coupling in and coupling out of a mode of a multi-mode fiber;
Fig. 3b illustrates an example holographic mode transformer coupling the SMF mode $LP_{01}$ into a $LP_{02}$ mode and vice versa;
Fig. 3c shows an example fused fiber mode coupler using fused MMF;
Fig. 3d shows an example $LP_{01}$ to $LP_{11}$ mode converter based on crystal fiber structure;
Fig. 4 illustrates an example passive waveguide structure configured to couple the $LP_{01}$, $LP_{11}$, 0 degree, $LP_{11}$ , 90 degree modes into and out of a MMF/FMF;
Figs. 5a, 5b and 5c illustrate example power values of the different mode along the passive waveguide structure of Fig. 4;
Fig. 6 illustrates a further example passive waveguide structure;
Fig. 7a and 7b illustrate the concentration of modes of a waveguide in an example index taper and/or in an example separation taper;
Fig. 7c illustrates an example separation taper function which allows for a constant (low) cross-coupling coefficients between modes of a waveguide; and
Fig. 7d illustrates the extinction of modes for different length values of an example separation taper.

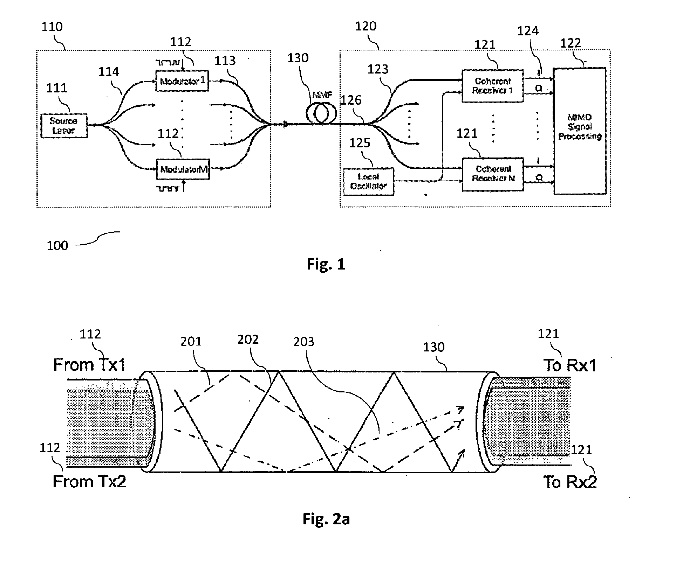

In Fig.1 an optical transmission system 100 comprising a multi-mode transmitter 110 and a multi-mode receiver 120 is illustrated. This optical transmission system 100 enables the transport of a plurality of optical signals at the same wavelength over a MMF 130. The multi-mode transmitter 110 comprises a source laser 111 which provides an optical carrier signal 114. The optical carrier signal 114 is modulated separately by a set of M modulators 112, thereby providing M differently modulated optical signals 113. These differently modulated optical signals 113 are coupled to different modes of the MMF 130.

At a respective multi-mode receiver 120, the received optical signal 126 is coupled out into N received optical signals 123. These N received optical signals 123 are detected by N coherent receivers 121 at the output of the MMF 130. The N coherent receivers 121 make use of a joint local oscillator 125. It should be noted that the number N of separately received optical signals 123 may be different from the number M of modulated optical signals 113. In an embodiment, however, M and N are equal.

The N coherent receivers 121 provide N digitized received signals 124. These digitized received signals 124 are jointly submitted to MIMO (multiple-input multiple-output) processing 122 in order to numerically isolate the information transmitted at the multi-mode transmitter 110 within the M modulated optical signals 113. For this purpose MIMO detection schemes, e.g. schemes which are already known from wireless or wireline transmission systems, may be used.

Fig. 2a illustrates different modes 201, 202 and 203 in the multi-mode fiber 130. Typically, light travelling in an optical fiber forms so-called hybrid-type modes which are modes with nonzero electric and magnetic fields in the direction of propagation. Commonly, groups of the exact hybrid-type modes are formed, with the modes of each group exhibiting practically the same group velocity. In a weakly guiding communication fiber, the superposition of the exact modes in each group is linear polarized. These superpositions of modes are themselves treated as fiber modes and they are usually referred to as quasi LP (linear polarization) modes $LP_{m,nu}$, wherein m and nu are integers which denote the particular mode. In the following, the index numbers will be indicated without a separating comma, i.e. the mode $LP_{01}$ refers to the basic mode $LP_{0,1}$. Conventional MMFs 130 can carry approximately more than 50 modes. For very long fiber links, the slight velocity differences of the exact modes, i.e. the hybrid-type modes, become visible and the grouping to LP modes may become meaningless. In the context of this document the term "modes" denotes "LP modes" and/or "exact modes", depending on the fiber link length of the transmission system.

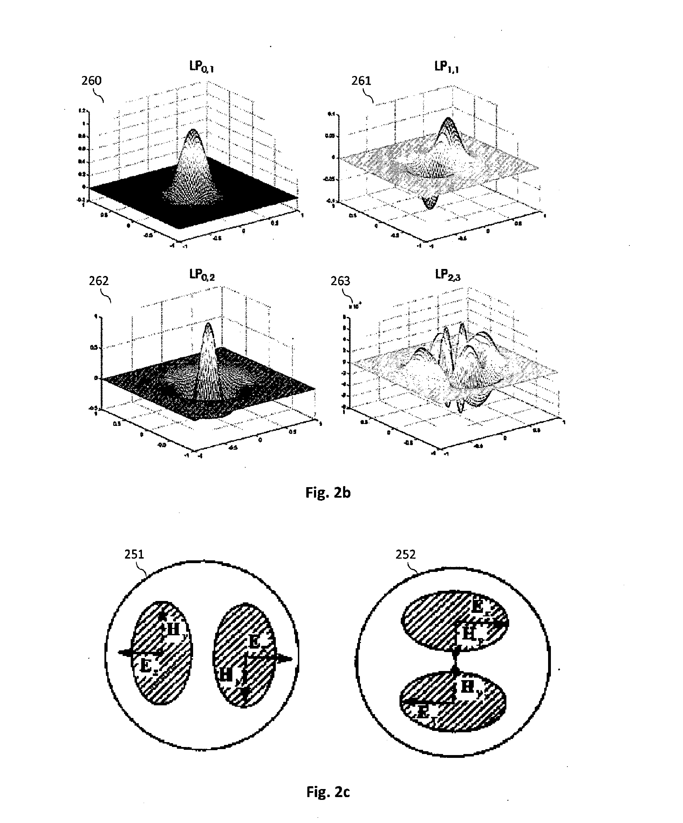

Example mode fields $LP_{m,nu}$ are illustrated in Fig. 2b. In particular, the mode fields of the lowest MMF (or the lowest few mode fiber) modes are shown. The $LP_{01}$ mode 260 is the lowest order mode, the $LP_{11}$ mode 261 is the next higher mode. Furthermore, the $LP_{02}$ mode 262 and the $LP_{23}$ mode 263 are shown. Fig. 2b illustrates the intensity of the different modes across the cross section of the MMF.

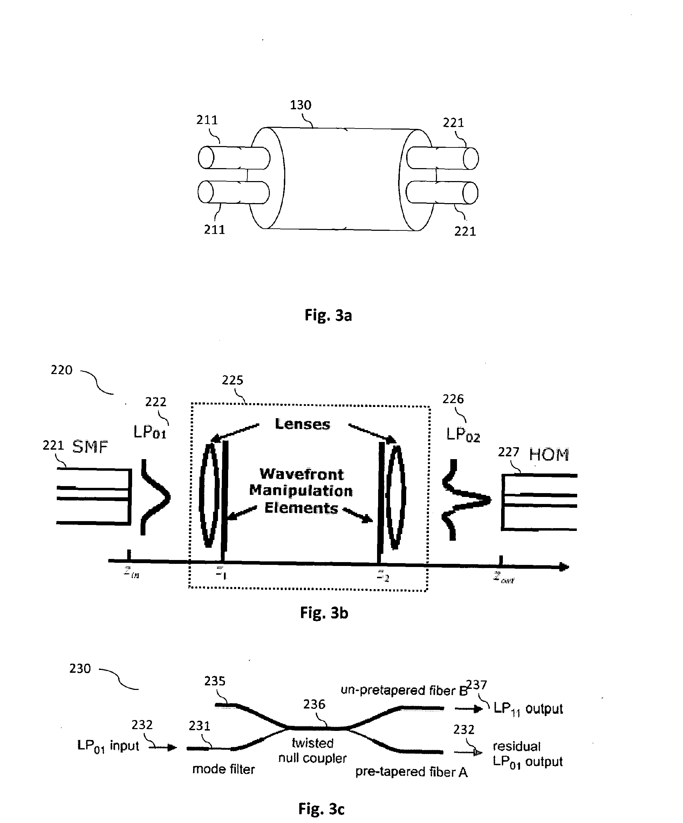

The launching or coupling in of the M modulated optical signals 113 into the MMF 130 at the multi-mode transmitter 110 and the extraction or coupling out of the N received optical signals 123 from the MMF 130 at the multi-mode receiver 120 is illustrated in Fig. 3a. The M modulated optical signals 113 may be carried by M single mode fibers 211. The SMF-MMF coupling between the M SMFs 221 and the MMF 130 may be performed by butt-coupling with different lateral offsets for the different modulated optical signals 113 at the transmitter 110. In a similar manner, the N received optical signals 123 may be coupled out of the MMF 130 at the receiver 120 by butt-coupling of N SMFs 221 with different lateral offsets for the different received optical signals 123. It should be noted that Fig. 3a illustrates the idealized concept of coupling different spatial modes into and/or out of a MMF/FMF. In the following practical implementations of mode couplers or mode transformers are described.

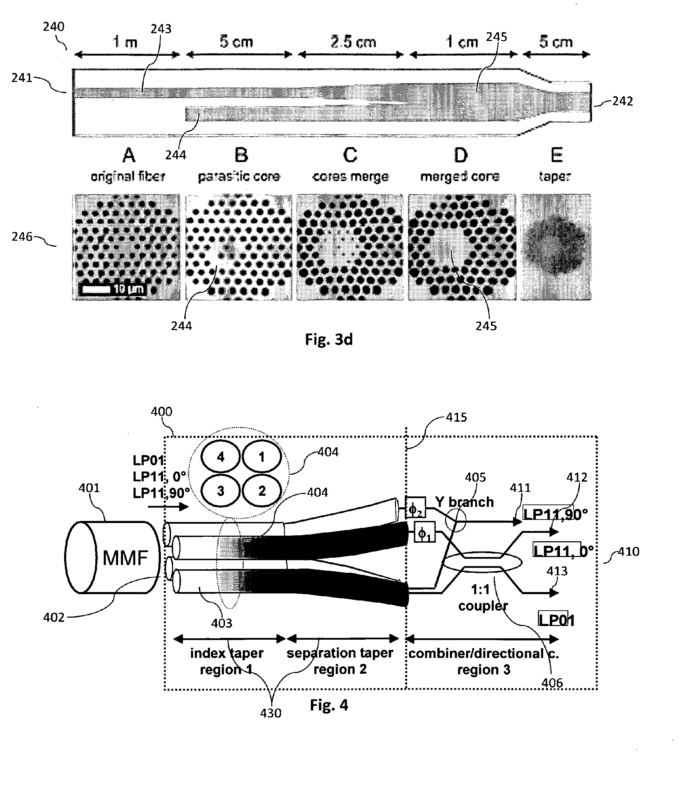

Figs. 3b, 3c and 3d illustrate possible configurations for exciting a specific fiber mode within a MMF. The coupling solution 220 of Fig. 3b is based on a fixed or tunable hologram 225 which transforms the mode field 222 of a single mode fiber pigtail 221 coming from a transmitter into the mode field 226 which shall be excited within a MMF 227. In order to achieve such mode transformation, wavefront manipulation elements are used which perform a spatial phase modulation of the optical signal and thereby modify the energy distribution of the optical signal.

Alternative coupling solutions may be based on guided waves using a fused fiber coupler with a MMF (or few mode fiber) or an adiabatic mode transformer. Such guided wave coupling solutions are illustrated in Figs. 3c and 3d. The guided wave coupling solution 230 of Fig.

3c comprises a single mode fiber 231 and a MMF 235. The SMF 231 and the MMF 235 have a common fused-type coupling section 236. By using such fused-type mode selective couplers an input mode 232 ($LP_{01}$ in the illustrated example) may be coupled into a field mode 237 ($LP_{11}$ in the illustrated example) of the MMF 235. Typically, such couplers involve coupling losses, so that a residual mode 232 remains within the single mode fiber 231. These losses are due to the fact that usually the coupling coefficients and the length of the fused-type coupling section 236 cannot be controlled in a reliable fashion.

Fig. 3d illustrates an example adiabatic mode transformer 240. The adiabatic mode transformer 240 is used to convert an $LP_{01}$ mode at the input 241 to an $LP_{11}$ mode at the output 242. For this purpose a first fiber core 243 carrying the $LP_{01}$ mode is progressively, i.e. adiabatically, merged with a second fiber core 244 to a joint fiber core 245. This progressive merging of the two fiber cores 243, 244 is performed along the region "C". In order to implement the adiabatic mode transformer 240, so called photonic crystal fiber (PCF) transitions are used. The cross-section of the adiabatic mode transformer 240 is illustrated in the diagrams 246. It can be seen that the original fiber comprises a plurality of holes (dark spots on the diagrams). The holes may be selectively collapsed in order to form an arc-shaped parasitic core 244 in region B. In region C further holes are progressively collapsed in order to progressively merge the first 243 and the second 244 core, in order to finally yield the joint or merged core 245 in region D.

It has been found that the optical mode transformer solutions illustrated in Figs. 3b, 3c, 3d have disadvantages for mode splitting in MIMO systems. This is mainly due to the following reasons:

(1) The above mentioned optical mode transformers define only the transformation of one SMF mode to one MMF mode. In other words, the above mentioned optical mode transformers are limited to single modes, wherein the present document deals with the insertion and/or extraction of a plurality of modes into and/or out of a MMF.

(2) The above mentioned optical mode transformers, e.g. the fused MMF fiber coupler of Fig. 3c, require the controlling of coupling coefficients between the different modes in order to ensure a low loss coupling of modes into and/or out of the MMF. The number of coupling coefficients which need to be controlled increases with the number of modes. However, many of the fiber parameters, i.e. the coupling coefficients between the different modes, are not individually controllable during the drawing process of the fiber. This will typically result in a poor extinction ratio and low scalability with increasing mode number.

(3) A further challenge of the coupling of a plurality of modes is that at the optical receiver 120 the rotation of $LP_{yx}$ modes, with y>0, is typically not known.

This is shown in Fig. 2c for the $LP_{11}$ mode. It can be seen that the $LP_{11}$ mode exists as two degenerated modes 251, 252, with a 0 degree and a 90 degree mode orientation of their mode fields. The two degenerated modes 251, 252 have the same phase constant. Only the MMF modes $LP_{0x}$ (x>0) exhibit no azimuthal dependency of the mode field. All other $LP_{yx}$ modes (y>0) can appear at the receiver 120 with a random rotation. In addition, the modes may exist in two differently rotated versions (see the 0 degree and 90 degree orientation 251, 252 of $LP_{11}$ in Fig. 2c) and the modes can hence be considered as two different modes each capable of carrying a different transmitter signal. Therefore, the splitter must also have the ability to decompose the $LP_{yx}$ mode into two differently rotated modes, such as the 0 and 90 degree $LP_{11}$ modes 251, 252 illustrated in Fig. 2c, and split the decomposed $LP_{yx}$ modes to two different SMF output ports. In principle, this issue could be addressed by the mode splitter solutions 230, 240 using a fused fiber coupler. However, this issue can probably not be handled in the holographic solution 220 which acts on optical rays.

Alternatively, electronic mode separation may be possible by illuminating a coherent receiver array with the output facet of the MMF (like a phased array for MIMO antennas). Such a coherent receiver array comprises a plurality of coherent receivers 121 which are spatially arranged to scan or sample a different section of the optical spot of the MMF. However, in this case the number of coherent receivers 121 within the array typically needs to significantly exceed the number M of MMF modes and the number M of optical transmitters. By doing this, the complexity of the optical receiver 120 using MIMO processing 122 is significantly increased.

Overall it must be noted that the aforementioned coupling solutions have several limitations. In fused fiber couplers formed by few mode fibers as shown in Fig. 3c only the splitting of two modes has been demonstrated so far, with a poor extinction ratio and an unsolved demand for controlling different coupling strengths within the fused fiber region 236 during the coupler drawing process. Furthermore, the additional splitting of 0 degree and 90 degree $LP_{11}$ modes 251, 252 is not possible. The adiabatic mode transformer 240 of Fig. 3d, which is based on photonic crystal fibers, allows transforming an $LP_{01}$ mode to a $LP_{11}$ mode. However, a multi-port operation involving a higher number of modes and the separation of 0 and 90 degree modes has not been demonstrated so far.

In order to address the above limitations of coupling solutions, a passive optical waveguide structure 400 is proposed in Fig. 4. This passive optical waveguide structure 400 serves as a low loss mode splitter for all modes of a MMF 401 or a few mode fiber (FMF) 401. The structure 400 can be realized as a fused silica fiber structure, as a crystal fiber structure, or as an integrated optic structure (photonic crystal structure) with a butt coupled MMF 401.

At the input to the passive optical waveguide structure 400, the refractive index profile of the mode splitter 400 is similar to the MMF/FMF 401 supporting the same modes (or a few modes more). Hence, the transmission fiber (MMF/FMF) 401 can be coupled with negligible loss into the mode splitter 400 by fusion splicing, butt coupling or via lenses. In an embodiment, the input section 402 of the optical waveguide structure 400 is matched to the end section of the MMF/FMF 401.

At the output 410 of the passive optical waveguide structure 400, there are (at least) as many single mode waveguides or fibers (SMF) as there are modes propagating in the MMF/FMF 401. The single mode waveguides or fibers (SMF) carry one of the plurality of field modes of the MMF/FMF 401.

Within the passive optical waveguide structure 400, an optical multi waveguide coupler 404 comprising P single mode waveguides (SMF) 403 gradually changes its core indices/core radius from P identical SMFs (symmetric coupler) 403 to an asymmetric coupler. This may be achieved by increasing or decreasing the core index of one or more SMFs 403 gradually. This leads to a splitting of LP modes to different SMFs 403. The gradual modification of the refractive index is performed in the index taper/region 1 and the refractive index change is illustrated by the gradual color change of the SMFs 403 (in particular, SMFs 403-1 and 403-2) from white to dark gray. A further improvement of the splitting extinction may be achieved by a gradual increase of the distance between the SMFs 403. Such gradual modification of the distance between the P SMFs 403 is illustrated in the separation taper/region 2, where the P SMFs 403 are progressively separated from one another.

A gradual, i.e. adiabatic, core index change means that a compromise between the maximum index change and the device length exists. In order to separate the individual waveguides to different SMF terminal output fibers in a short separation taper, even the smallest index difference between the waveguides needs to be large enough for a steep separation function. On the other hand, the length of the preceding index taper is determined by the maximum index difference between two waveguides. Typically, it may be stated that the higher the maximum index difference between the waveguides, the longer the device. Hence a short index taper together with a short separation taper can be realized, if minimum index difference and maximum index difference are close together, i.e. if the difference between the minimum index difference and maximum index difference is small. In other words shorter devices 400 may be possible if some SMFs 403 have the same index function, i.e. their refractive index changes in an identical manner. This is illustrated in Fig. 4, where the SMFs 403-1 and 403-2 have the same gradual index change. However, in such a case, the two output SMFs 403-1 and 403-2 may carry parts of the same LP input mode or modes. This can be seen in Fig. 4, where the output SMFs 403-1 and 403-2 carry the $LP_{01}$ mode and the $LP_{11}$, 0 degree mode. The multiple modes can then be combined to one SMF by a Y-branch 405 or they can be separated by a standard 1:1 coupler 406.

It should be noted that non-rotation symmetric modes ($LP_{yx}$, y>0) may be decomposed into two submodes and their signals may appear at different outputs. This can be seen in Fig. 4, where the SMFs 403-1 and 403-2 both carry the $LP_{11}$, 0 degree mode, wherein the SMFs 403-3 and 403-4 both carry the $LP_{11}$, 90 degree mode.

Each SMF carries the signal transported in one of the different modes of the MMF/FMF 401 or a group of Q SMFs, e.g. a group of SMFs 403-1 and 403-2, carries different superpositions of the signals of Q modes such that they can be electronically demultiplexed without performance loss by the MIMO processing acting on the signals (after detection by optical receivers 120 attached at each SMF 403). This means that in an embodiment, the optical 1:1 coupler 406 can be omitted in Fig. 4 and the function of splitting a superposition of Q modes within a group of Q SMFs can be performed electronically using MIMO processing.

The waveguide structure 400 between input 402 and output 410 comprises P coupled single mode waveguides/fibers 403 which are gradually changing their refractive index (index taper/region 1) and their separation (separation taper/region 2). Both regions 1 and 2 may also be referred to as a taper region 430. P is greater or equal to the number N of modes carried in the MMF/FMF 401. At the output of region 1 and region 2 the modes are separated to different SMFs 403 due to the mode converting property of adiabatically changing index profiles and/or the adiabatically changing distance of the SMFs 403. The output of region 1 and region 2 may also be referred to as the terminal region 415.

However, some of the modes may appear not in only one, but in two (or more) output waveguides 403. Then a reduction to one SMF can be applied by a waveguide combiner, e.g. a Y branch 405 or a 1:1 coupler 406. It might also be possible that two superposed modes appear on two output SMFs 403, wherein the two modes distinguish only in the phase difference (0 and 180 degrees). This is the case for modes $LP_{11}$, 0 degree and $LP_{01}$ in the tow SMFs 403-1, 403-2. In this case a 1:1 coupler 406 may be used to separate the two modes into two separate output SMFs 412, 413. This combining or mode discrimination by 1:1 couplers 406 may be performed in the region 3 of the mode splitter 400.

It is also possible to combine the regions 1 and 2, i.e. it is possible to perform a simultaneous index and separation taper. Furthermore, the combination with region 3 may be possible by omitting the mutual separation of the respective two SMFs 403-1, 403-2 in a 1:1 coupler 406 and by converging the pairs of SMFs 403-1, 403-2 and 403-3, 403-4 to one waveguide, respectively.

As indicated above, Fig. 4 illustrates an example for a 3 mode FMF 401 carrying the modes $LP_{01}$ and $LP_{11}$ with 0 and 90 degree field rotation. Fig.4 shows the basic waveguide structure of the mode splitter 400 for splitting all modes of a few mode fiber (FMF) 401 supporting $LP_{01}$ and $LP_{11}$ modes. The four SMFs 403 form an index taper (region 1) which transforms the different FMF modes adiabatically to fundamental modes of different waveguides (output SMFs). Region 1 is followed by a separation taper (region 2) further adiabatically separating the fused dissimilar SMFs 403 into individual SMFs 403. Finally an optional combiner/directional combiner section (region 3) is provided, where the signal of some of the SMFs 403 are added, e.g. in a Y branch 405, or the phase difference between two SMFs 403 is used to discriminate the signals coming from two different LP modes (1:1 coupler 406). Eventually, the $LP_{01}$ and $LP_{11}$ with 0 and 90 degree modes are provided in separate fibers 411, 412, 413.

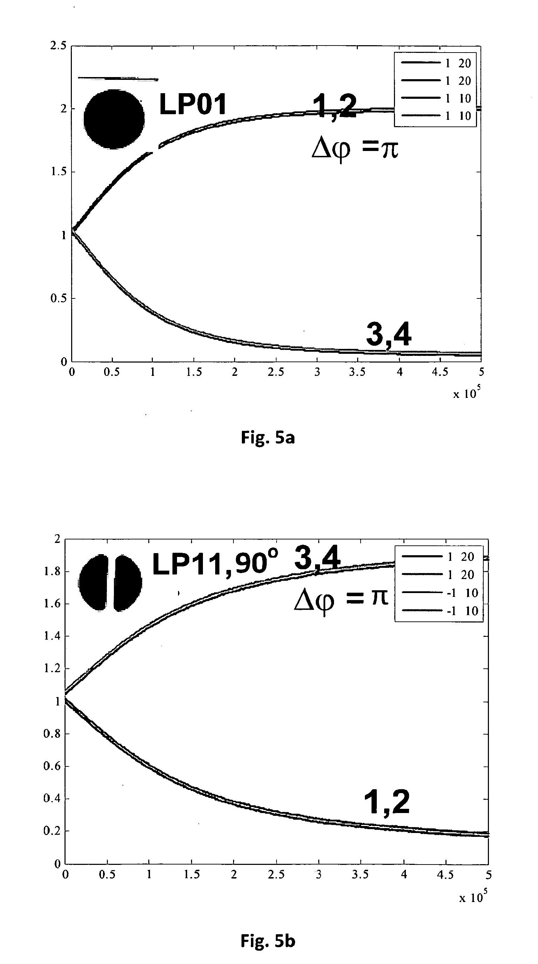

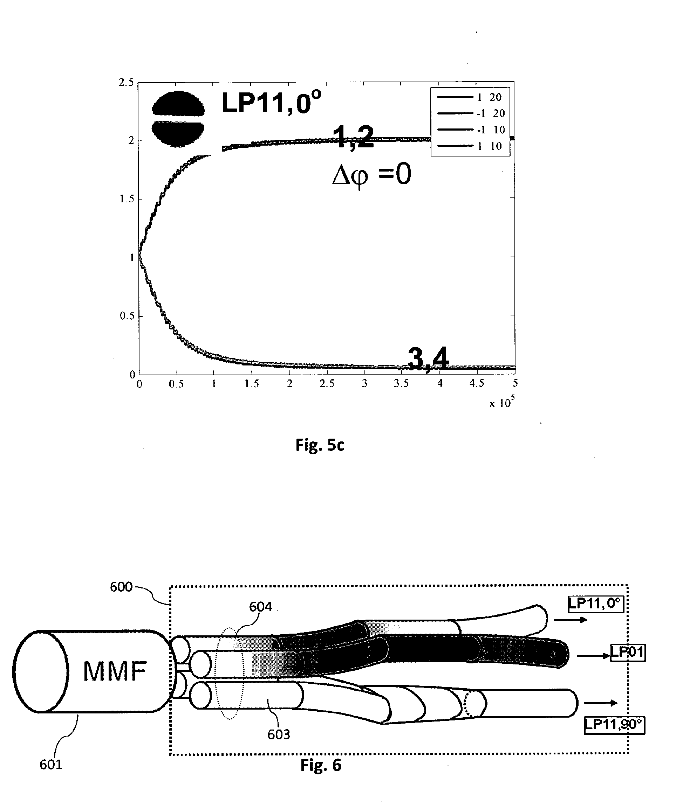

Figs. 5a, 5b, 5c show the evolution of the optical power in the four waveguides or SMFs 403 along the index taper (region 1 in Fig. 4) for the three possible input modes ($LP_{11}$, $LP_{11}$ 0 degree, $LP_{11}$ 90 degree). At z=0, i.e. at the left-most position on the abscissa in Figs. 5a, 5b, 5c, which corresponds to the input 402 of the SMFs 403, all of the four SMFs 403 are identical. They have the same core refractive index of 1e-3. With increasing z, the index difference of the core is gradually increasing from 1e-3 to 2e-3 for SMFs 403-1 and 403-2. The index stays constant at 1e-3 for SMFs 403-3 and 403-4. It can be seen from Figs. 5a, 5b, 5c that the optical power for the different input modes is separated into two SMFs, respectively. A further improvement of the extinction ratio, i.e. the power ratio of a particular mode between the output SMFs, is achieved by a further gradual (adiabatic) separation of the SMSs (e.g. from $16\mu m$ to $40\mu m$ and more, which is not shown in Figs. 5a, 5b, 5c. The signal carried by the $LP_{11}/90°$ mode illustrated in Fig. 5b is carried in SMFs 403-3 and 403-4. It can be combined to one SMF by a Y branch 405. Both, the $LP_{01}$ mode illustrated in Fig. 5a and the $LP_{11}/0°$ mode illustrated in Fig. 5c appear in SMFs 403-1 and 403-2. The modes can be further separated by MIMO processing after coherent detection, i.e. by an electronic realization of a 1:1 coupler, or by an optical 1:1 coupler 406 due to the different phase differences $\Delta\varphi$ for the two LP modes between SMF 403-1 and 403-2.

Fig. 6 illustrates a further embodiment of a mode splitter 600. At the input side of the mode splitter 600 a plurality of P SMFs 603 is provided. In the illustrated example, P equals 4. The input side of the plurality of SMFs 603 may be realized as a fused set of P SMFs 603. At the input side, the refractive index of the plurality of SMFs 603 should be adapted to the refractive index at the output of the MMF/FMF 601. Along the longitudinal extension of the plurality of SMFs 603, a plurality of measures are used to transfer one of the plurality of modes carried in the MMF/SMF 601 into one of the plurality of SMFs 603. These measures comprise:

● The adiabatic variation of the refractive index of the P SMFs 603. The refractive index of each SMF 603 may be varied independently of the other SMFs 603. As illustrated by the varying grey-shading in Fig. 6, the refractive index may be increased or decreased. This may be implemented by using differently doped SMFs 603 for the construction of the mode splitter 600.

● The adiabatic variation of the distance between the different SMFs 603. The distance of one SMF 603 to the other SMFs 603 may be varied separately. Furthermore, the distance may be increased or decreased. The variation of the distance may be implemented e.g. by using photonic crystal fibers (PCF) as outlined in the context of Fig. 3d.

● The merging of two or more SMFs 603. Such merging may be implemented by fusing the two or more SMFs 603.

Fig. 6 illustrates a mode splitter or mode combiner 600 which does not require the use of Y-branches 405 or 1:1 couplers 406. The waveguide structure 600 provides three output ports (fibers or more generally waveguides), i.e. a number of ports which corresponds to the number of modes carried in the MMF/FMF 601. Each output port or terminal port carries one of the modes of the MMF/FMF 601.

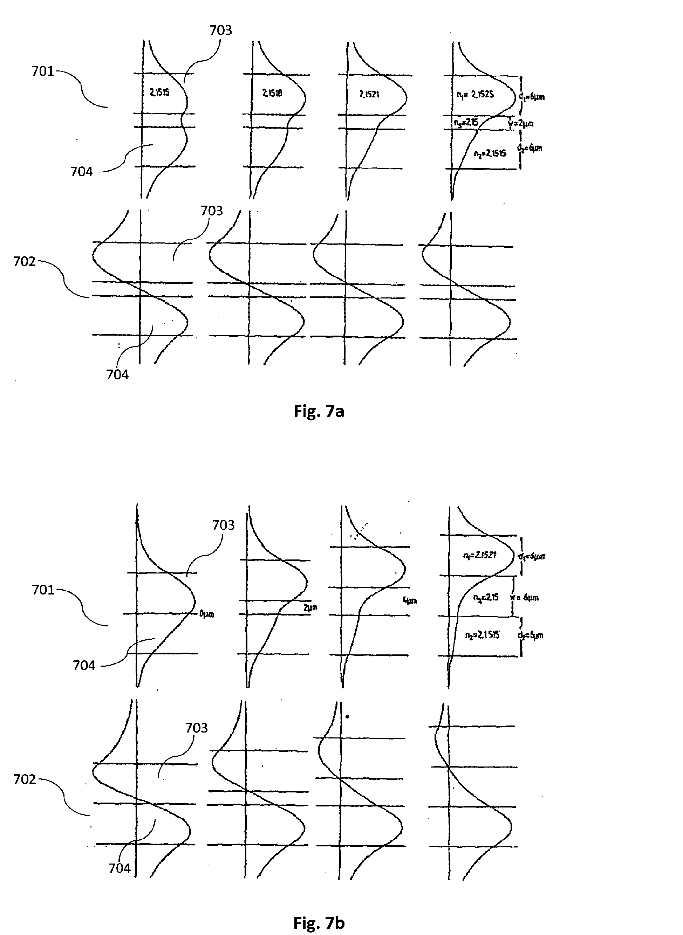

Fig. 7a and Fig. 7b illustrate the basic principle of adiabatic mode splitting by an index taper and a separation taper, respectively. In each Figure, the curves in the top and bottom drawing 701, 702 show the optical field distribution of an even (or symmetrical) and an odd (anti-symmetrical) optical mode for a two mode waveguide structure. In the illustrated example, the even and odd modes 701, 702 correspond to the $LP_{01}$ and $LP_{11}$ mode of two coupled fibers, respectively. The horizontal lines indicate the propagation or longitudinal extension of the waveguides 703, 704 and the refractive index distribution along this extension.

In Fig. 7a, the upper fiber/waveguide 703 has a refractive index distribution which increase from $n_1$=2.1515 on the left side to $n_1$=2.1525 on the right side. The lower fiber/waveguide 704 has a constant refractive index distribution at $n_2$=2.1515. The upper fiber and the lower fiber have a core width of 6$\mu$m and both cores stay at a constant distance of 2$\mu$m. It is clearly visible from Fig. 7a that the symmetric and anti symmetric mode field of the even and odd mode 701, 702 shown in the top and bottom drawings, concentrate in different waveguides 703, 704 when the top waveguide's index is increased. The even mode 701 concentrates in the high index waveguide 703 and the odd mode 702 concentrates in the low index waveguide 704. This principle can be used to concentrate different modes in different waveguides and to thereby split and/or merge the different modes of a multimode fiber.

In Fig. 7b it is shown that the effect of concentration of different modes in different waveguides is further pronounced by increasing the separation or distance between the waveguides. The two waveguides 703, 704 have a different refractive index, namely $n_1$=2.1521 and $n_2$=2.1515 for the upper 703 and lower 704 waveguide, respectively. The separation of the two waveguides 703, 704 increases from 0$\mu$m, on the left side, to 6$\mu$m, on the right side. It can be seen that the even mode 701 concentrates in the waveguide 703 having the higher refractive index, whereas the odd mode 702 concentrates in the waveguide 704 having the lower refractive index. Furthermore, it can be seen that this concentration of modes in the different waveguides 703, 704 is further pronounced when using both, index tapering and separation tapering. In other words, by combining an adiabatic index taper and an adiabatic separation taper, the extinction ratio of an even mode in the low index waveguide, and/or the extinction ratio of an odd mode in the high index waveguide can be increased.

A design rule for the design of an index and separation taper can be derived from the coupled mode theory of optical waveguides. The change of index $n_i(z)$ in a first 703 and a second 704 waveguide i=1, 2, as well as the change of separation w(z) between the first 703 and second 704 waveguide along the longitudinal axis or propagation axis z of the waveguides 703, 704 should be sufficiently small to avoid cross-coupling between even and odd modes 701, 702. This cross-coupling $C_{eo}$ between the two modes 701, 702 depends on the difference $|\beta_1 - \beta_2|$ of the propagation constants $\beta_i$ of the two individual waveguides i=1, 2. Furthermore, the cross-coupling $C_{eo}$ between the two modes 701, 702 depends on the coupling c from the first waveguide 703 to the second waveguide 704 and vice versa along the propagation dimension z. Overall, the cross-coupling $C_{eo}$ between the two modes 701, 702 may be expressed as

$$c_{eo} = \frac{d}{dz}\left(\frac{1}{2}\frac{c}{|\beta_1 - \beta_2|}\right),$$

wherein $\beta_i$ is roughly equal to $k_0 n_i$, wherein $k_0$ denotes the wave number. Therefore $\beta_1 - \beta_2$ is directly linked to the index difference $n_1 - n_2$. The coupling c between the waveguides 703, 704 can be expressed by the evanescent field strength $E_2(w)$ of the field of the second waveguide 704 seen by the first waveguide 703 at a separation of w, wherein $E_2$ is normalized. Furthermore, the evanescent part of the field typically decays exponentially.

In words, the above formula indicates that the cross-coupling $C_{eo}$ between the two modes 701, 702 depends on the derivative of the expression within the brackets with regards to the propagation dimension z. The coupling c between the waveguides 703, 704 typically decreases exponentially with the separation w of the waveguides 703, 704. As such, the numerator of the expression in the brackets describes the separation taper. On the other hand, the denominator $\beta_1 - \beta_2$ is linked to the index difference $n_1 - n_2$ between the two waveguides 703, 704. As such, the denominator describes the index taper. Overall, the degree of change of the separation and/or the index of the waveguides 703, 704 along the propagation axis z determines the cross-coupling $C_{eo}$ between the two modes 701, 702.

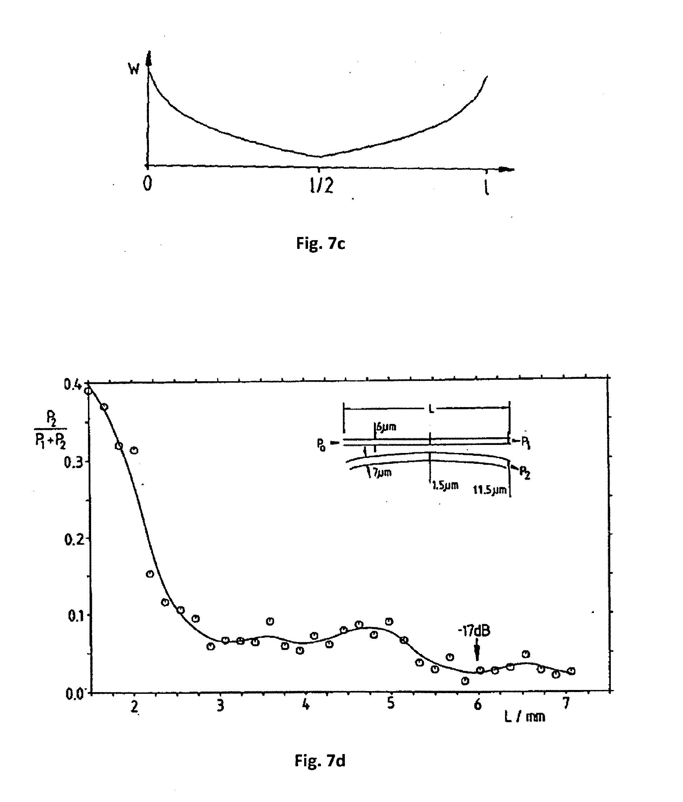

Therefore the equation describes the requirement for the maximum tolerable index change and the maximum tolerable separation change along the propagation direction z of index taper and separation taper, respectively. As an example, an integration of the above equation under the assumption of a constant cross-coupling coefficient $C_{eo}$ leads to a separation function w(z) between the two waveguides 703, 704. An example separation function w(z) is illustrated in Fig. 7c, where the first and second waveguide 703, 704 are first approached and then separated, while maintaining a constant magnitude of the cross-coupling coefficient $C_{eo}$ between the two modes 701, 702. In other words, a separation function w(z) for a constant magnitude of the cross-coupling coefficient $C_{eo}$ between even and odd modes 701, 702 for the approaching (z = 0 to L/2) and the separation (z=L/2 to L) of two asymmetric waveguides 703, 704 is illustrated. In yet other words, when choosing a separation taper along the propagation axis z in accordance with the separation function w(z) of Fig. 7c, a constant (low) magnitude of the cross-coupling coefficient $C_{eo}$ between even and odd modes 701, 702 can be maintained, i.e. the separation is changed adiabatically.

Fig. 7d illustrates the effectiveness of a separation taper. The measured relative cross coupled power, i.e. the power of the field of the second waveguide 704 over the total power of the fields in the first and second waveguide 703, 704, confirms that when using a length of the separation taper which exceeds a minimum value, the unwanted cross coupling between modes remains small. For the example shown in Fig. 7d a low cross-coupling can be achieved for a minimum separation taper length of 1.5mm (3mm in the Fig. 7d, since L denotes the length of two separation tapers). In the example of Fig. 7d, an integrated optic Lithium Niobate coupler was used. Note, that the measurement setup did not allow for isolating the waveguide relative waveguide power significantly below 0.1. Therefore the curve exhibits a comparatively high crosstalk floor of about 0.1. Instead of detuning the two waveguides of the coupler by different refractive indices, a slight difference of the propagation constant of the first waveguide and the second waveguide may be achieved by using different waveguide widths, e:g. of 6$\mu$m and 7$\mu$m, respectively.

In the present document a method and a system for isolating and/or inserting specific modes into a MMF or FMF is described. The modes can be isolated and/or inserted with low optical loss. The described optical coupler enables the use of multi mode transmission in optical fibers which - in combination with MIMO techniques - allows for a higher transmission capacity and/or a longer transmission reach compared to single mode transmission.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An optical waveguide structure (400) configured to interconnect with a multimode fiber (401) supporting M optical modes, M>2, and configured to insert and/or isolate L subgroups of the M optical modes to and/or from the multimode fiber (401), L>1, wherein the L subgroups of optical modes each comprise less than M optical modes and wherein the L subgroups in total comprise the M optical modes; the structure comprising:

   —— a coupling section (402) configured to interconnect with the multimode fiber (401) and to transfer the M optical modes between the multimode fiber (401) and the optical waveguide structure (400), wherein the coupling section (402) has a refractive index profile matching a refractive index profile of the multimode fiber;
   —— a terminal section (415) opposite the coupling section (402) comprising L waveguides (403) which are configured to each provide and/or receive one of the L subgroups, respectively;
   —— a taper section (430) intermediate the coupling section (402) and the terminal section (410) and configured to adiabatically
   —— isolate each one of the M optical modes to one of the L waveguides (403); and/or
   —— merge the modes of the L waveguides (403) to the M optical modes.

2. The optical waveguide structure (400) of claim 1, wherein the taper section (430) comprises a first and a second waveguide (403-1, 403-2, 403-3, 403-4) of the L waveguides (403), extending longitudinally from the coupling section (402) to the terminal section (415).

3. The optical waveguide structure (400) of claim 2, wherein a refractive index of the first waveguide (403-1) increases and/or decreases adiabatically along a longitudinal extension of the first waveguide (403-1).

4. The optical waveguide structure (400) of claim 3, wherein the refractive index of the first waveguide (403-1) changes differently along the longitudinal extension than a refractive index of the second waveguide (403-3).

5. The optical waveguide structure (400) of claim 4, wherein the refractive index of the first waveguide (403-1) is higher than the refractive index of the second waveguide (403-3), to thereby concentrate a symmetric mode of the M modes in the first waveguide (403-1).

6. The optical waveguide structure (400) of any of claims 2 to 5, wherein

   —— the distance between the first (403-1) and the second (403-3) waveguide increases and/or decreases adiabatically.

7. The optical waveguide structure (400) of claim 6, wherein the distance is increased and/or decreased for a predetermined minimum length along the longitudinal extension.

8. The optical waveguide structure (400) of any of claims 2 to 7, wherein

   —— the first and the second waveguide (603) are adiabatically merged within the taper section (430); and
   —— the merged waveguide extends towards the terminal section (415).

9. The waveguide structure (400) of any previous claim, further comprising an optical Y branch (405) configured to

   —— merge a mode carried in the first and the second waveguide (403) downstream of the terminal section (415) to a terminal waveguide (411); and/or
   —— split a mode carried in a terminal waveguide (411) upstream of the terminal section (415) onto the first and the second waveguide (403).

10. The waveguide structure (400) of any previous claim, further comprising a 1:1 coupler (406) configured to

    —— split two different modes carried in the first waveguide (403) downstream of the terminal section (415) to two terminal waveguides (412, 413), respectively; and/or
    —— merge two different modes carried on two terminal waveguides (412, 413) upstream of the terminal section (415), respectively, to the first waveguide (403) carrying the two different modes.

11. The waveguide structure (400) of any previous claim, comprising

    —— a fused silica fiber structure;
    —— a crystal fiber structure;
    —— integrated optical structure; and/or
    —— a photonic crystal structure.

**12.** The waveguide structure (400) of any previous claim, wherein the coupling section (402) is configured to interconnect with the multimode fiber (401) using butt coupling.

**13.** An optical transmitter (110) configured to transmit data over M communication channels using M optical modes of a multimode fiber (130, 401), respectively, M>2, the optical transmitter (110) comprising:

— a laser (111) configured to provide an optical carrier signal (114);
— M modulators (112) configured to modulate data onto the optical carrier signal (114), thereby yielding M differently modulated optical signals (113); and
— an optical waveguide structure (400) according to any of claims 1 to 12, configured to insert the M differently modulated optical signals onto the M optical modes of the multimode fiber (140, 401).

**14.** An optical receiver (120) configured to receive data transmitted over M communication channels using M optical modes of a multimode fiber (130, 401), respectively, M>2, the optical receiver (120) comprising:

— an optical waveguide structure (400) according to any of claims 1 to 12, configured to isolate L subgroups of optical modes on L waveguides from the M optical modes of the multimode fiber (130, 401);
— L coherent receivers (121) for the L waveguides, respectively, the L coherent receivers (121) being configured to provide a plurality of digitized received signals (124); and
— a multiple-input multiple-output processing unit (122) configured to determine the data of the M communication channels from the plurality of digitized received signals (124).

**15.** A method for interconnecting with a multimode fiber (401) comprising M optical modes, M>2, and for inserting and/or isolating L subgroups of the M optical modes to and/or from the multimode fiber (401), L>1, wherein the L subgroups of optical modes each comprise less than M optical modes and wherein the L subgroups in total comprise the M optical modes; the method comprising:

— transferring the M optical modes between the multimode fiber (401) and an optical waveguide structure (400), wherein at a coupling section (402) the optical waveguide structure (400) has a refractive index profile matching a refractive index profile of the multimode fiber (401);
— isolating each one of the M optical modes to one of L waveguides (403) and/or merging the modes of L waveguides (403) to the M optical modes; and
— providing and/or receiving a subgroup of optical modes at each one of the L waveguides (403).

**Amended claims in accordance with Rule 137(2) EPC.**

**1.** An optical waveguide structure (400) configured to interconnect with a multimode fiber (401) supporting M optical modes, M>2, and configured to insert and/or isolate L subgroups of the M optical modes to and/or from the multimode fiber (401), L>1, wherein the L subgroups of optical modes each comprise less than M optical modes and wherein the L subgroups in total comprise the M optical modes; the structure comprising:

- a coupling section (402) configured to interconnect with the multimode fiber (401) and to transfer the M optical modes between the multimode fiber (401) and the optical waveguide structure (400), wherein the coupling section (402) has a refractive index profile matching a refractive index profile of the multimode fiber;
- a terminal section (415) opposite the coupling section (402) comprising L waveguides (403) which are configured to each provide and/or receive one of the L subgroups, respectively;
- a taper section (430) intermediate the coupling section (402) and the terminal section (410) and configured to adiabatically

- isolate each one of the M optical modes to one of the L waveguides (403); and/or
- merge the modes of the L waveguides (403) to the M optical modes,

wherein the taper section (430) comprises a first and a second waveguide (403-1, 403-2, 403-3, 403-4) of the L waveguides (403), extending longitudinally from the coupling section (402) to the terminal section (415), and wherein a refractive index of the first waveguide (403-1) increases and/or decreases adiabatically along a longitudinal extension of the first waveguide (403-1).

**2.** The optical waveguide structure (400) of claim 1, wherein the refractive index of the first waveguide (403-1) changes differently along the longitudinal extension than a refractive index of the second waveguide (403-3).

**3.** The optical waveguide structure (400) of claim 2, wherein the refractive index of the first waveguide (403-1) is higher than the refractive index of the second waveguide (403-3), to thereby concentrate a symmetric mode of the M modes in the first waveguide (403-1).

**4.** The optical waveguide structure (400) of any of claims 1 to 3, wherein

- the distance between the first (403-1) and the second (403-3) waveguide increases and/or decreases adiabatically.

**5.** The optical waveguide structure (400) of claim 4, wherein the distance is increased and/or decreased for a predetermined minimum length along the longitudinal extension.

**6.** The optical waveguide structure (400) of any of claims 1 to 5, wherein

- the first and the second waveguide (603) are adiabatically merged within the taper section (430); and
- the merged waveguide extends towards the terminal section (415).

**7.** The waveguide structure (400) of any previous claim, further comprising an optical Y branch (405) configured to

- merge a mode carried in the first and the second waveguide (403) downstream of the terminal section (415) to a terminal waveguide (411); and/or
- split a mode carried in a terminal waveguide (411) upstream of the terminal section (415) onto the first and the second waveguide (403).

**8.** The waveguide structure (400) of any previous claim, further comprising a 1:1 coupler (406) configured to

- split two different modes carried in the first waveguide (403) downstream of the terminal section (415) to two terminal waveguides (412, 413), respectively; and/or
- merge two different modes carried on two terminal waveguides (412, 413) upstream of the terminal section (415), respectively, to the first waveguide (403) carrying the two different modes.

**9.** The waveguide structure (400) of any previous claim, comprising

- a fused silica fiber structure;
- a crystal fiber structure;

- integrated optical structure; and/or
- a photonic crystal structure.

**10.** The waveguide structure (400) of any previous claim, wherein the coupling section (402) is configured to interconnect with the multimode fiber (401) using butt coupling.

**11.** An optical transmitter (110) configured to transmit data over M communication channels using M optical modes of a multimode fiber (130, 401), respectively, M>2, the optical transmitter (110) comprising:

- a laser (111) configured to provide an optical carrier signal (114);
- M modulators (112) configured to modulate data onto the optical carrier signal (114), thereby yielding M differently modulated optical signals (113); and
- an optical waveguide structure (400) according to any of claims 1 to 10, configured to insert the M differently modulated optical signals onto the M optical modes of the multimode fiber (140, 401).

**12.** An optical receiver (120) configured to receive data transmitted over M communication channels using M optical modes of a multimode fiber (130, 401), respectively, M>2, the optical receiver (120) comprising:

- an optical waveguide structure (400) according to any of claims 1 to 10, configured to isolate L subgroups of optical modes on L waveguides from the M optical modes of the multimode fiber (130, 401);
- L coherent receivers (121) for the L waveguides, respectively, the L coherent receivers (121) being configured to provide a plurality of digitized received signals (124); and
- a multiple-input multiple-output processing unit (122) configured to determine the data of the M communication channels from the plurality of digitized received signals (124).

**13.** A method for interconnecting with a multimode fiber (401) comprising M optical modes, M>2, and for inserting and/or isolating L subgroups of the M optical modes to and/or from the multimode fiber (401), L>1, wherein the L subgroups of optical modes each comprise less than M optical modes and wherein the L subgroups in total comprise the M optical modes; the method comprising:

- transferring the M optical modes between the multimode fiber (401) and an optical waveguide structure (400), wherein at a coupling section (402) the optical waveguide structure (400) has a refractive index profile matching a refractive index profile of the multimode fiber (401);
- isolating each one of the M optical modes to one of L waveguides (403) and/or merging the modes of L waveguides (403) to the M optical modes; wherein the isolating is performed using a first and a second waveguide (403-1, 403-2, 403-3, 403-4), and wherein a refractive index of the first waveguide (403-1) increases and/or decreases adiabatically along a longitudinal extension of the first waveguide (403-1); and
- providing and/or receiving a subgroup of optical modes at each one of the L waveguides (403).

**Fig. 1**

**Fig. 2a**

LP$_{0,1}$

260

LP$_{1,1}$

261

LP$_{0,2}$

262

LP$_{2,3}$

263

**Fig. 2b**

251

252

**Fig. 2c**

**Fig. 3a**

**Fig. 3b**

**Fig. 3c**

**Fig. 3d**

A — original fiber
B — parasitic core
C — cores merge
D — merged core
E — taper

**Fig. 4**

Fig. 5a

Fig. 5b

**Fig. 5c**

**Fig. 6**

**Fig. 7a**

**Fig. 7b**

**Fig. 7c**

**Fig. 7d**

Europäisches
Patentamt

European
Patent Office

Office européen
des brevets

# EUROPEAN SEARCH REPORT

**Application Number**

EP 10 00 3637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 390 002 A2 (SEL ALCATEL AG [DE]) 3 October 1990 (1990-10-03) * abstract; figure 1 * ----- | 1-15 | INV. G02B6/28 |
| A | US 2003/081902 A1 (BLAUVELT HENRY A [US] ET AL) 1 May 2003 (2003-05-01) * figures 5-10 * * paragraphs [0139] - [0149] * ----- | 1-15 | |
| A | US 2005/094952 A1 (GONTHIER FRANCOIS [CA] ET AL) 5 May 2005 (2005-05-05) * abstract; figure 3 * ----- | 1-15 | |
| A | US 4 606 020 A (RUFFIN PAUL B [US]) 12 August 1986 (1986-08-12) * abstract; figure 1 * ----- | 1-15 | |
| A | US 5 133 029 A (BARAN JANE E [US] ET AL) 21 July 1992 (1992-07-21) * abstract; figures 1,2 * ----- | 1 | |
| A | US 2004/196537 A1 (STARODOUMOV ANDREI [US]) 7 October 2004 (2004-10-07) * abstract; figures 1,2,4,5 * ----- | 1 | TECHNICAL FIELDS SEARCHED (IPC) G02B |
| A | WO 2004/042430 A2 (MASSACHUSETTS INST TECHNOLOGY [US]; WATTS MICHAEL R [US]) 21 May 2004 (2004-05-21) * abstract; figure 1 * ----- | 1 | |
| A | US 2007/031087 A1 (MIYADERA NOBUO [JP] ET AL) 8 February 2007 (2007-02-08) * abstract; figure 13 * ----- | 1 | |

The present search report has been drawn up for all claims

| Place of search | Date of completion of the search | Examiner |
|---|---|---|
| The Hague | 30 July 2010 | Faderl, Ingo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 00 3637

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2010

| Patent document cited in search report | | Publication date | Patent family member(s) | | Publication date |
|---|---|---|---|---|---|
| EP 0390002 | A2 | 03-10-1990 | AT | 139387 T | 15-06-1996 |
| | | | AU | 623509 B2 | 14-05-1992 |
| | | | AU | 5236590 A | 04-10-1990 |
| | | | ES | 2090053 T3 | 16-10-1996 |
| | | | JP | 2291511 A | 03-12-1990 |
| | | | JP | 3195338 B2 | 06-08-2001 |
| | | | US | 5050952 A | 24-09-1991 |
| US 2003081902 | A1 | 01-05-2003 | US | 2008226224 A1 | 18-09-2008 |
| | | | US | 2005213889 A1 | 29-09-2005 |
| | | | US | 2006120669 A1 | 08-06-2006 |
| | | | US | 2010024192 A1 | 04-02-2010 |
| US 2005094952 | A1 | 05-05-2005 | NONE | | |
| US 4606020 | A | 12-08-1986 | CA | 1225474 A1 | 11-08-1987 |
| US 5133029 | A | 21-07-1992 | CA | 2112387 A1 | 07-01-1993 |
| | | | DE | 69218772 D1 | 07-05-1997 |
| | | | DE | 69218772 T2 | 13-11-1997 |
| | | | EP | 0591381 A1 | 13-04-1994 |
| | | | JP | 6508937 T | 06-10-1994 |
| | | | WO | 9300599 A1 | 07-01-1993 |
| US 2004196537 | A1 | 07-10-2004 | US | 2006187541 A1 | 24-08-2006 |
| WO 2004042430 | A2 | 21-05-2004 | AT | 430325 T | 15-05-2009 |
| | | | AU | 2003287343 A1 | 07-06-2004 |
| | | | CA | 2503817 A1 | 21-05-2004 |
| | | | EP | 1556718 A2 | 27-07-2005 |
| | | | JP | 2006505016 T | 09-02-2006 |
| | | | KR | 20050049559 A | 25-05-2005 |
| US 2007031087 | A1 | 08-02-2007 | CN | 1942795 A | 04-04-2007 |
| | | | WO | 2005101075 A1 | 27-10-2005 |
| | | | KR | 20060135053 A | 28-12-2006 |

EPO FORM P0459

For more details about this annex : see Official Journal of the European Patent Office, No. 12/82